# EUROPEAN PATENT SPECIFICATION

(11) **EP 2 533 039 B1**
(45) Date of publication and mention of the grant of the patent: **01.03.2017**
(21) Application number: 12171287.1
(22) Date of filing: 24.04.2008
(51) Int. Cl.: G01N 27/447

(54) **METHOD FOR AUTOMATED HIGH THROUGHPUT IDENTIFICATION OF CARBOHYDRATES AND CARBOHYDRATE MIXTURE COMPOSITION PATTERNS AS WELL AS SYSTEMS THEREFORE**
VERFAHREN ZUR AUTOMATISCHEN KOHLENHYDRATIDENTIFIKATION MIT HOHEM DURCHSATZ UND KOHLENHYDRATMISCHUNGSZUSAMMENSETZUNGSMUSTER SOWIE SYSTEME DAFÜR
PROCÉDÉ D'IDENTIFICATION AUTOMATIQUE DE HAUT RENDEMENT DE GLUCIDES ET MOTIFS DE COMPOSITION DE MÉLANGE DE GLUCIDES AINSI QUE LES SYSTÈMES ASSOCIÉS

(43) Date of publication of application: 12.12.2012
(62) Divisional of application: 08007887.6
(73) Proprietor: Max-Planck-Gesellschaft zur Förderung der Wissenschaften e.V., 80539 München (DE)
(72) Inventor: RAPP, Erdmann, 39114 Magdeburg (DE); BOHNE, Jana, 35279 Neustadt (DE); REICHL, Udo, 39104 Magdeburg (DE); BOHNE, Christian, 35279 Neustadt (DE)
(74) Representative: Kröncke, Rolf

(56) References cited:
- DOMANN P J ET AL: "Separation-based glycoprofiling approaches using fluorescent labels", PROTEOMICS - PRACTICAL PROTEOMICS 200709 DE, vol. 2, no. 1, September 2007 (2007-09), pages 70-76, XP002491243, ISSN: 1862-7595
- RAPP ET AL: "Characterization of Glycosylation Patterns Utilizing a DNA-Sequenzer and a MALDI-TOF Mass Spectrometer", , 23 April 2007 (2007-04-23), XP002491244, Retrieved from the Internet: URL:http://edoc.mpg.de/327343 [retrieved on 2008-08-05]
- ZHOU ET AL: "Characterization of N-glycans from recombinant human erythropoietin by capillary electrophoresis with laser induced fluorescence", ACTA PHARMACEUTICA SINICA, vol. 34, no. 3, 1999, XP002491245,
- KHANDURINA J ET AL: "Large-scale carbohydrate analysis by capillary array electrophoresis: Part 2. Data normalization and quantification", ELECTROPHORESIS WILEY-VCH GERMANY, vol. 25, no. 18-19, October 2004 (2004-10) , pages 3122-3127, XP002683853, ISSN: 0173-0835

## Description

The present invention relates to methods for identification of carbohydrates compositions, e.g. out of complex carbohydrate mixtures, as well as the determination of carbohydrate mixture composition patterns (e.g.: of glycosylation patterns) based on determining migration time indices using capillary gel electrophoresis - laser induced fluorescence and identifying said carbohydrate components based on comparing said migration time indices with standard migration time indices from a database. In a further aspect, the present invention relates to a method for carbohydrate mixture composition pattern profiling (e.g.: for glycosylation pattern profiling) using capillary gel electrophoresis - laser induced fluorescence (CGE-LIF) generating electropherograms from said mixtures. In another aspect, the present invention refers to a system for an automated determination and/or identification of carbohydrates and/or carbohydrate mixture composition patterns, (e.g.: glycosylation patterns).

### Background of the invention

The importance of glycosylation in many biological processes is commonly accepted and has been discussed in detail throughout the literature over the last 30 years. Glycosylation is a common and highly diverse post-translational modification of proteins in eukaryotic cells. Various cellular processes has been described, involving carbohydrates on the protein surface. The importance of glycans in protein stability, protein folding and protease resistance have been demonstrated in the literature. In addition, the role of glycans in cellular signalling, regulation and developmental processes has been demonstrated in the art.

The oligosaccharides are mainly attached to the protein backbone, either by N- (via Asn) or 0-(via Ser-Thr) glycosidic bonds, whereas N-glycosylation represents the more common type found in glycoproteins. Variations in glycosylation site occupancy (macroheterogeneity), as well as variations in these complex sugar residues attached to one glycosylation site (microheterogeneity) result in a set of different protein glycoforms. These have different physical and biochemical properties, which results in additional functional diversity. In manufacturing of therapeutic proteins in mammalian cell cultures, macro- and microheterogeneity were shown to affect properties like protein solubility, structural stability, protease resistance, or biological and clinical activity, see for example Butler, M., Cytotechnology, 2006, 50, 57-76. For instance, the relevance of the glycosylation profile for the therapeutic profile of monoclonal antibodies is well documented; see e.g. Parekh, et al., Nature, 1985, 316, 452-457.

Glycan biosynthesis is a non-template-driven process, involving the cell glycosylation machinery. N-glycan structures are also depending on various factors during the production process, like substrates levels and other culture conditions. Thus, the glycoprotein manufacturing does not only depend on the glycosylation machinery of the host cell but also on external parameters, like cultivation conditions and the extracellular environment. Culture parameters affecting glycosylation include temperature, pH, aeration, supply of substrates or accumulation of by-products such as ammonia and lactate. In case of recombinant glycoprotein or antibody manufacturing, characterization of glycosylation profiles attracts increasing interest. In particular, because of regulatory reasons, the glycosylation profile of drugs has to be determined.

Today, complex soluble but also oligomeric and/or polymeric carbohydrate mixtures, obtained synthetically or from natural sources, like plants or human or animal milk are used as nutrition additives or in pharmaceuticals. The occurrence of sialic acids or sialic acid derivatives and the occurrence of monosaccharides having a phosphate, sulphate or carboxyl group within those complex natural carbohydrates is even increasing their complexity. Because of this complexity, those prebiotic oligo- or polysaccharides, like neutral or acidic galacto-oligosaccharides, long chain fructo-oligosaccharides, which can have nutritional and/or biological effects, are gaining increasing interest for food and pharmaceutic industry.

A wide range of strategies and analytical techniques for analysing glycoproteins, glycopeptides and released N-glycans or O-glycans have been established including e. g. 2D-HPLC profiling, mass spectrometry and lectin affinity chromatography, as reviewed by Geyer and Geyer, Biochimica Et Biophysica Acta-Proteins and Proteomics 2006, 1764, 1853-1869 and Domann et al., Practical Proteomics, 2007, 2, 70-76.

To obtain structural data of complex molecules, today carbohydrates are either analysed by mass spectrometry (MS) or nuclear magnetic resonance spectroscopy (NMR) which are generally laborious and time consuming techniques regarding sample preparation and data interpretation.

Each of these techniques has advantages as well as drawbacks. Choosing one, respectively a set of these methods for a given problem can become a time- and labor- intensive task. For example, NMR provides detailed structural information, but is a relatively insensitive method (nmol), which can not be used as a high-throughput method. Using MS is more sensitive (fmol) than NMR. However, quantification can be difficult and only unspecific structural information can be obtained without addressing linkages of monomeric sugar compounds. Both techniques require extensive sample preparation and also fractionation of complex glycan mixtures before analysis to allow evaluation of the corresponding spectra. Furthermore, a staff of highly skilled scientists is required to ensure that these two techniques can be performed properly.

Although separation techniques based on the capillary electrophoresis principle, like capillary gel electrophoresis where considered for complex carbohydrate separation in the art before, e.g. Callewaert, N. et al, Glycobiology 2001, 11, 275-281, WO 01/92890, Callewaert, N. et al, Nat Med, 2004, 10 429-434 or Khandurina et al., Electrophoresis 2004, 25, 3122-3127, there is still an ongoing need for a reliable and fast system allowing automated high throughput carbohydrate analysis.

As identified by Domann et al, normal phase chromatography and capillary gel electrophoresis have an excellent selectivity for the analysis of fluorescently labelled glycans. Serious drawbacks regarding the limit of detection and the linear dynamic range of CGE-LIF compared to normal phase liquid chromatography with fluorescence detection have been reported. Furthermore with respect to CGE-LIF no methods are described in the art allowing to rapidly monitor alterations in carbohydrate mixture composition patterns (e.g. glycosylation patterns) including fast and straightforward structure elucidation, without the need for complex data evaluation. Further, there is a need in the art to provide means and methods allowing for determination and identification of carbohydrate mixtures of unknown composition enabling identification of the carbohydrate structures. In particular, there is a need for a sensitive but reproducible and robust system and method allowing the identification or determination of carbohydrate mixture composition patterns (e.g.: glycosylation patterns) as well as of carbohydrate compositions of unknown constitution in automated high throughput mode.

### Description of the drawings

Figure 1 provides a workflow of the carbohydrate analysis according to the present invention (right side) and of the prior art (left side).

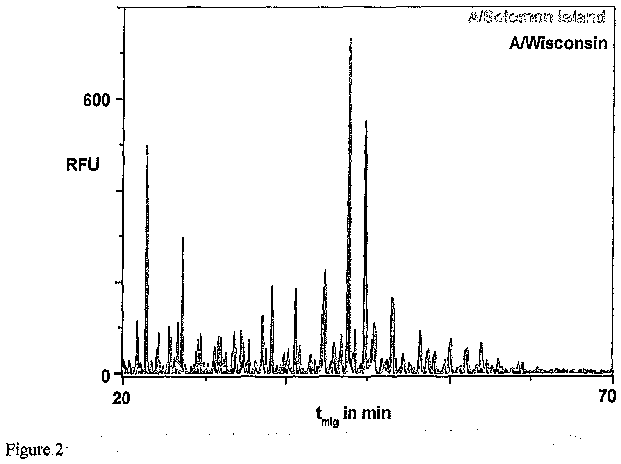

Figure 2 provides a fingerprint comparison of glycan pools of the membrane glycoprotein "hemagglutinin" of two different influenza virus strains.

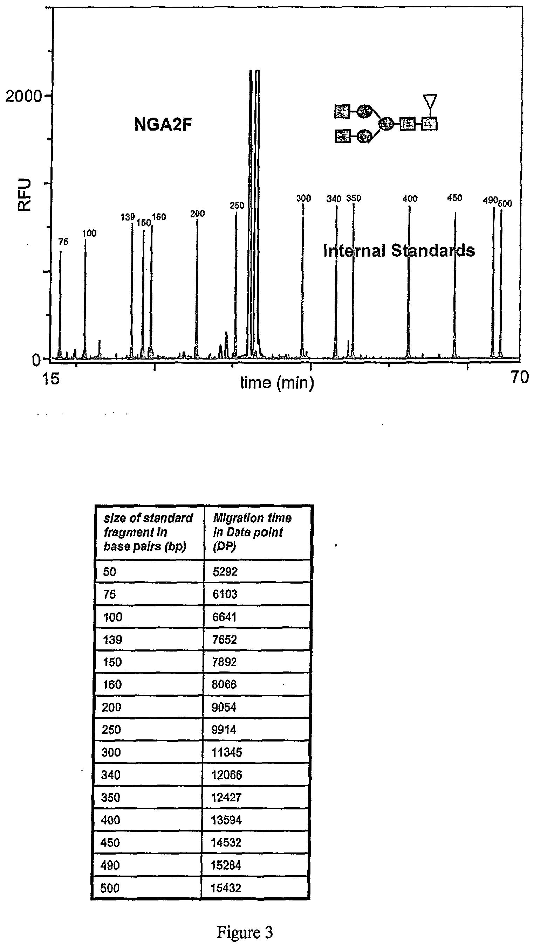

Figure 3 shows the standardization of migration times to internal standard indices (bp = base pair).

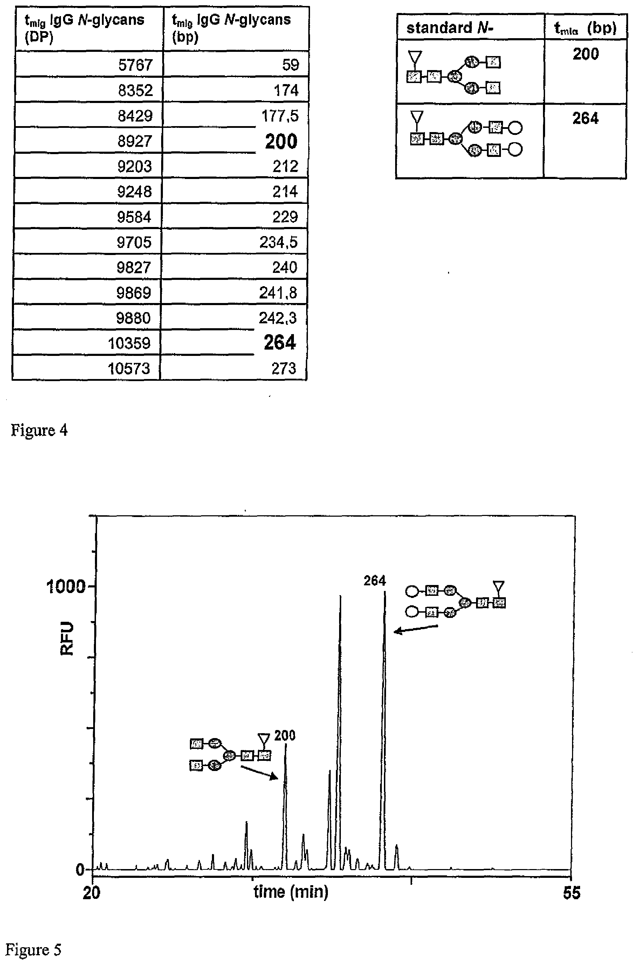

Figure 4 shows the standardization of the migration indices calculated as "bp-indices".
Figure 5 shows an analysis of an unknown carbohydrate composition obtained from glycans together with the identification of carbohydrate components based on the bp-index matching using the database according to the present invention.
Figure 6 shows the polynomial-fit of internal standard peaks.
Figure 7 provides an overlay of sample electropherograms from several runs, adjusted to each other via polynomial-fit.

### Detailed description of the present invention

In a first aspect, the present invention relates to a method as described in claim 1 for an automated determination and/or identification of carbohydrates and/or a carbohydrate mixture composition pattern profiling (e.g.: glycosylation pattern profiling) comprising the steps of:
a) obtaining a sample containing at least one carbohydrate;
b) labelling said carbohydrate(s) with a fluorescent label;
c) providing standard(s) of known composition;
d) determining the migration time(s) of said carbohydrate(s) and of the standard(s) of a known composition using capillary gel electrophoresis - laser induced fluorescence;
e) normalizing the migration time(s) of step d) to indices based on given standard migration time indice(s) of the standard(s);
f) comparing these migration time indice(s) of the carbohydrate(s) with standard migration time indice(s) from a database;
g) identifying or determining the carbohydrate(s) and/or the carbohydrate mixture composition patterns. The standard is added to the sample containing the carbohydrate mixture composition and the standard of known composition is a known carbohydrate composition.

In the following the term "carbohydrate(s)" refers to monosaccharide(s), like glucose, galactose, mannose, fructose, fucose, N-acetylglucoseamine, sialic acid; disaccharide(s), like lactose, sucrose, maltose, cellobiose; oligosaccharide(s), like N-glycans, O-glycans, galactooligosaccharides, fructooligosaccharides; and polysaccharide(s), like amylase, amylopektin, cellulose, glycogen, glycosaminoglycan, or chitin.

The term "glycoconjugate(s)" as used herein means compound(s) containing a carbohydrate moiety, examples for glycoconjugates are glycoproteins, glycopeptides, proteoglycans, peptidoglycans, glycolipids, GPI-anchors, lipopolysaccharides.

The term "carbohydrate mixture composition pattern profiling" as used in means establishing a pattern specific for the examined carbohydrate mixture composition based on the number of different carbohydrates present in the mixture, the relative amount of said carbohydrates present in the mixture and the type of carbohydrate present in the mixture and profiling said pattern e.g. in a diagram or in a graphic, e.g. as an electropherogram. Thus, fingerprints illustrated e.g. in form of an electropherogram, a graphic, or a diagram are obtained. For example glycosylation pattern profiling based on fingerprints fall into the scope of said term. In this connection, the term "fingerprint" as used herein refers to electropherograms being specific for a carbohydrate or carbohydrate mixture, a diagram or a graphic.

The term "quantitative determination" or "quantitative analysis" refers to the relative and/or absolute quantification of the carbohydrates. Relative quantification can be done straight foreward via the individual peak heights of each compound, which corresponds linear (within the linear dynamic range of the LIF-detector) to its concentration. The relative quantification outlines the ratio of each of one carbohydrate compound to another carbohydrate compound(s) present in the composition or the standard. Further, absolute (semi-)quantitative analysis is possible.

The present inventors found that using capillary gel electrophoresis with laser induced fluorescence (CGE-LIF) allows a fast but robust and reliable analysis and identification of carbohydrates and/or carbohydrate mixture composition patterns (e.g.: glycosylation patterns of glycoproteins). The methods according to the present invention used in the context of glycoprotein analysis allow to visualize carbohydrate-mixture compositions (e.g.: glycan-pools of glycoproteins) including structural analysis of the carbohydrates while omitting highly expensive and complex equipment, like mass spectrometers or NMR-instruments. Due to its superior separation performance and efficiency compared to other separation techniques, capillary electrophoresis techniques, in particular, capillary gel electrophoresis are considered for complex carbohydrate separation before but said technique was not recommended in the art due to drawbacks which should allegedly provided when using said method, see e. g. Domann et al. or WO2006/114663. However, when applying the method according to the present invention, the technique of CGE-LIF allows for sensitive and reliable determination and identification of carbohydrate structures. In particular, the use of a capillary DNA-sequencer, (e. g. 4-Capillary Sequencers: 3100-Avant Genetic Analyzer and 3130 Genetic Analyzer; 16-Capillary Sequencer: 3100 Genetic Analyzer and 3130xl Genetic Analyzer; 48-Capillary Sequencer: 3730 DNA Analyzer; 96-Capillary Sequencer: 3730xl DNA Analyzer from Applied Biosystems) allows the performance of the method according to the present invention. The advanced method of the invention enables the characterization of variations in complex composed natural or synthetic carbohydrate mixtures and the characterization of carbohydrate mixture composition patterns (e.g.: protein glycosylation patterns), directly by carbohydrate "fingerprint" alignment in case of comparing sampled with known carbohydrate mixture compositions.

The method according to the present invention is a relatively simple and robust but nevertheless highly sensitive and reproducible analysis method with high separation performance.

Especially the combination of the above mentioned instruments with up to 96 capillaries in parallel and the software/database tool enclosed within the invention, enables an automated high throughput analysis.

In another aspect, the present invention relates to a method as described in claim 2 for an automated carbohydrate mixture composition pattern profiling comprising the steps of:
a) providing a sample containing a carbohydrate mixture composition;
b) labelling of said carbohydrate mixture composition with a fluorescent label;
c) providing a second sample having a known carbohydrate mixture composition pattern to be compared with;
d) generating electropherogramms (fingerprints) of the carbohydrate mixture compositions of the first and second sample using capillary gel electrophoresis - laser induced fluorescence;
e) comparing the obtained electropherogramms (fingerprints) of the first sample and the second sample;
f) analyzing the identity and/or differences between the electropherogramms (fingerprints) of the first and the second sample. The standard migration time indices of the carbohydrate present in the samples are calculated based on internal standards of known composition. The internal standard is added to the samples to be analysed and the internal standard is a known carbohydrate mixture composition.

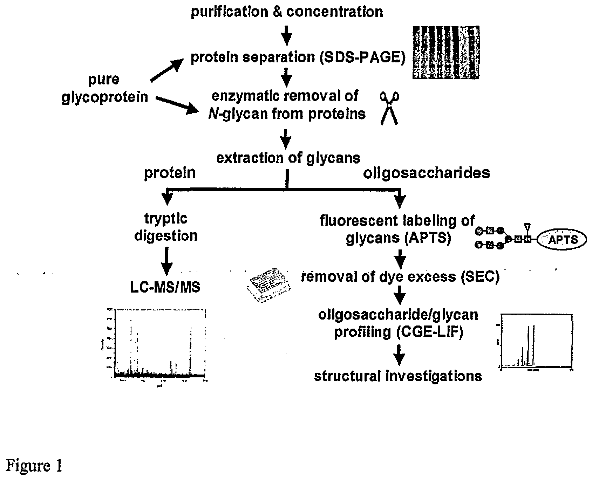

As shown in figure 1 outlining a workflow of carbohydrate analysis, after processing of samples, electropherograms - "fingerprints" - are generated and, according to the method of the present invention, simple and straightforward structural investigation and identification of carbohydrates of a test sample (e.g. glycan pool of glycoproteins) via automatic matching their normalized CGE migration times (migration time indices) with normalized CGE migration times of carbohydrates with known structures derived from a database, is possible. The database which is an element of the present invention, also referred to as "fingerprint library", contains structural information of known carbohydrates having assigned specific normalized migration time indices, namely CGE migration times. This database allows automated, fast and straightforward structural identification of carbohydrates from natural and recombinant glycoproteins after processing or any other sample containing mono-, oligo-, or polysaccharides by simple assignment of peaks from fingerprints to carbohydrates with known structures. This can be done fully automated via migration time matching of test samples with normalized migration times (migration time indices) of carbohydrates from corresponding database in a high throughput mode using a CGE-LIF system with e.g. up to 96 capillaries or more in parallel.

In a preferred embodiment, the test sample contains a mixture of carbohydrates. Preferably, said carbohydrates to be identified or determined are oligosaccharides. For example, said oligosaccharides/glycans are obtained from processing of glycoproteins, as e.g. shown in figure 1. That is, the sample represents an extraction of glycans and the method according to the present invention allows for the identification of a glycosylation pattern profile.

The invention is based on separating and detecting said carbohydrate mixtures (e.g.: glycan pools) utilizing the CGE-LIF technique, e.g. using a capillary DNA-sequencer which enables generation of carbohydrate composition pattern fingerprints, the automatic structure analysis of the separated carbohydrates via database matching of the normalized CGE-migration time of each single compound of the test sample mixture. The method claimed herein allows carbohydrate mixture composition profiling of synthetic or natural sources, like glycosylation pattern profiling of glycoproteins. The normalization of the migration times of the carbohydrates to migration time indices is based on the usage of a standard of known composition. The use of said method in combination with the system also allows to analyze said carbohydrate mixture compositions quantitatively. Thus, the method according to the present invention as well as the system represents a powerful tool for monitoring variations in the carbohydrate mixture composition like the glycosylation pattern of proteins without requiring complex structural investigations. For fluorescently labelled carbohydrates, the LIF-detection allows a limit of detection down to the attomolar range.

The standard necessary for normalization of each run may be contained in the carbohydrate sample to be analysed.

The fluorescent label used for labelling the carbohydrates may be e.g. the fluorescent labels 8-amino-1,3,6-pyrenetrisulfonic acid also referred to as 9-aminopyrene-1,4,6-trisulfonic acid (APTS), 8-aminonaphtalene-1,3,6-trisulfonic acid (ANTS) or other preferably multiple charged fluorescent dyes.

Based on the presence of the standard, qualitative and quantitative analysis can be effected. Relative quantification can be done easily just via the individual peak heights of each compound, which corresponds linear (within the linear dynamic range of the LIF-detector) to its concentration.

The present invention resolves drawbacks of other methods known in carbohydrate analysis, like chromatography, mass spectrometry and NMR. NMR and mass spectrometry represent methods which are time and labour consuming technologies. In addition, expensive instruments are required to conduct said methods. Further, most of said methods are not able to be scaled up to high troughput methods, like NMR techniques. Using mass spectrometry allows a high sensitivity. However, configuration can be difficult and only unspecific structural information could be obtained with addressing linkages of monomeric sugar compounds. HPLC is also quite sensitive depending on the detector and allows quantification as well. But as mentioned above, real high throughput analyses are only possible with an expensive massive employment of HPLC-Systems and solvents.

Other techniques known in the art are based on enzymatic treatment which can be very sensitive and result in detailed structure information, but require a combination with other methods like HPLC, MS and NMR. Further techniques known in the art relates to lectin or monoclonal antibody affinity providing only preliminary data without given definitive structural information.

The methods according to the present invention allow for high-throughput identification of carbohydrates mixtures having unknown composition or for high-throughput identification or profiling of carbohydrate mixture composition patterns (e.g.: glycosylation patterns of glycoproteins). In particular, the present invention allows determining the components of the carbohydrate mixture composition quantitatively.

The method of the present invention enables the fast and reliable measurement even of complex mixture compositions, and therefore enables determining and/or identifying the carbohydrates and/or carbohydrate mixture composition patterns (e.g.: glycosylation pattern) independent of the apparatus used but relates to the normalized migration times (migration time indices) only.

The invention allows for application in diverse fields. For example, the method maybe used for analysing the glycosylation of mammalian cell culture derived molecules, e.g. recombinant proteins, antibodies or virus or virus components, e.g. influenza A virus glycoproteins. Information on glycosylation patterns of said compounds are of particular importance for food and pharmaceuticals. Starting with the separation of complex protein mixtures by 1D/2D-gel-electrophoresis, the method of the present invention could be used also for glycan analysis of any other glycoconjugates. Moreover, pre-purified glycoproteins, e.g. by chromatography or affinity capturing, can be handled as well as by the method according to the present invention, substituting the gel separation and in-gel-degylcosylation step with in-solution-deglycosylation, continuing after protein and enzyme precipitation. Finally, complex soluble oligomeric and/or polymeric saccharide mixtures, obtain synthetically or from natural sources which are nowadays important nutrition additives/surrogates or as used in or as pharmaceuticals can be analysed.

Thus, two types of analyses may be performed on the carbohydrate mixtures. On the one hand, carbohydrate mixture composition pattern profiling like glycosylation pattern profiling may be performed and, on the other hand, carbohydrate identification based on matching carbohydrate migration time indices with data from a database is possible.

Therefore, a wide range of potential applications for the method according to the present invention is given ranging form production and/or quality control to early diagnosis of diseases which are producing, are causing or are caused by changes in the glycosylation patterns of glycoproteins.

In particular, in medical diagnosis, e.g. chronic inflammation recognition or early cancer diagnostics, where changes in the glycosylation patterns of proteins are strong indicators for disease, the method may be applied. The variations in the glycosylation pattern could simply be identified by comparing the obtained fingerprints regarding peak numbers, heights and migration times. Thus, disease markers may be identified, as it is described in similar proteomic approaches. It is, similar to comparing the proteomes of an individual at consecutive time points, the glycome of individuals could be analysed as indicator for disease or identification of risk patients.

Further, the method allows the differentiation of recombinant compounds vis-a-vis with natural compounds. For example, said method may be used in doping tests.

Systems for determining and/or identifying carbohydrate mixture composition patterns, like glycosylation pattern profiling comprise a capillary gel electrophoresis-laser induced fluorescence apparatus; a data processing unit comprising memory containing a database; and an output unit.

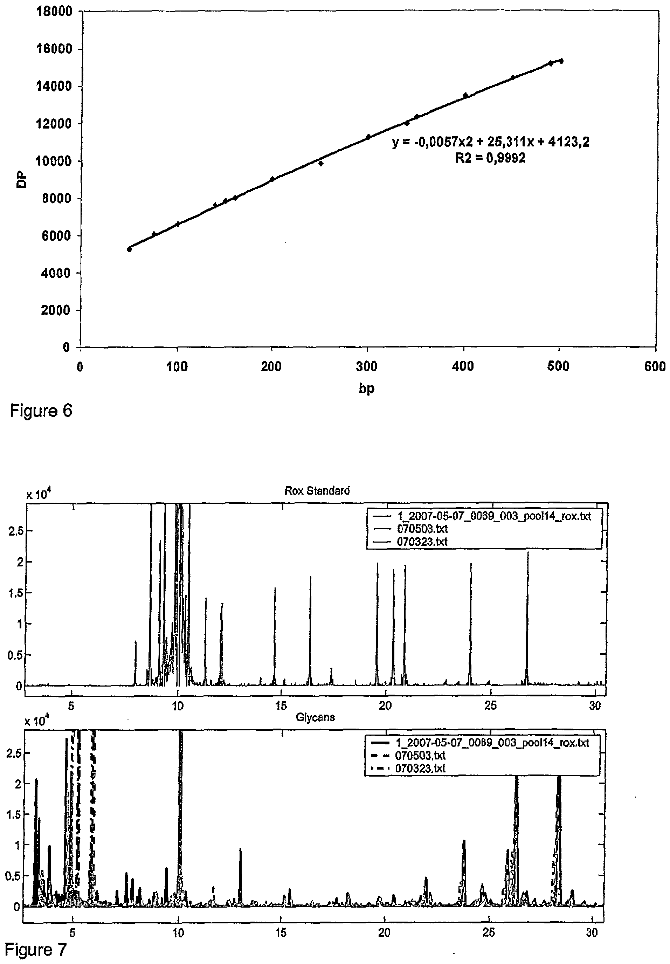

Preferably, the capillary gel electrophoresis-laser induced fluorescence apparatus is a capillary DNA sequencer. The database contains the normalized migration times (migration time indices, e.g. given as base pair indices). In the data processing unit raw data from the CGE-LIF-apparatus, like the capillary DNA sequencer (sample trace and internal standard ladder trace) are extracted, e.g. extracted in ASCII-format and filed on variables. The peaks within the electropherogram of the internal standard of each sample are identified. For direct comparison of different runs, the internal standard peaks from the different runs are adjusted to each other via polynomial-fit, see also figure 6. The sample electropherograms are normalized to the adjusted time scale of its internal standards, each with its previously determined individual polynomial-fit and, therefore, they can be compared directly via simple overlay, see also figure 7, showing an overlay of sample electropherograms from several runs adjusted to each other via polynomial-fit.

This means, each measured sample electropherogram, which always runs together with the internal standard, for example, the internal standard base pair ladder, is translated/ formatted by an algorithm from migration time to internal standard index and therefore normalized and indexed. The processed and normalized data enable direct comparison of different runs and allow the identification or exclusion of carbohydrates structures by simple migration time index matching of carbohydrates peaks from the sample with those already deposited within the data base. The invention enables the qualitative and quantitative analysis and the direct comparison of test carbohydrates samples, independent from the operator, instrument or laboratory.

Thus, a data base containing normalized migration times (indices) of carbohydrates is described, said migration time indices are based on CGE-LIF-measurement and are obtained by
a) analysing known carbohydrate structures in a sample together with an internal standard at the same time with a capillary gel electrophoresis - laser induced fluorescence means;
b) determining the migration time of said carbohydrate compound(s) and the standard;
c) normalizing the migration times of step b) based on given standard migration time(s) of the internal standard;
d) assigning the normalized carbohydrate compound migration times to standard migration time indices.

The home built data base is integrated e.g. into the home built software tool and can be fitted by the user himself. Said data base may be provided as an external tool or may be provided from a centralized server.

The structure data base/library with the assigned normalized CGE-migration times, e.g. base pairs indices, is generated by measuring single carbohydrates of known structure. The general library/data base where the known carbohydrate structures are deposited together with their migration time indices, enable sample and system independent data base matching of carbohydrate mixture composition patterns (fingerprints) like glycan pools from test samples.

The data from the CGE-LIF are extracted in computer readable form and filed on variables. The peaks within the electropherogram of the internal standard of each sample are identified and annotated. The time scales of the sample electropherograms are normalized and transferred from time to the internal standard domain, e.g. the base pair annotation, each to its corresponding internal standard trace, each with its previously determined individual polynomial-fit, and, therefore, the compound peaks are normalized.

The data from the data base of carbohydrate standards of known structures allow to identify unknown compounds with identical normalized migration times, just via matching their migration time indices with those from the library.

## Claims

1. A method for an automated determination and/or identification of carbohydrates and/or carbohydrate mixture composition pattern profiling comprising the steps of:
a) obtaining a sample containing at least one carbohydrate;
b) labelling said carbohydrate(s) with a fluorescent label;
c) providing a standard of known composition;
d) determining the migration time(s) of said carbohydrate(s) and the standard of a known composition using capillary gel electrophoresis - laser induced fluorescence;
e) normalizing the migration time(s) to migration time indice(s) based on given standard migration time indice(s) of the standard;
f) comparing these migration time indice(s) of the carbohydrate(s) with standard migration time indice(s) from a database;
g) identifying or determining the carbohydrates and/or the carbohydrate mixture composition patterns
wherein the standard composition is added to the sample containing the unknown carbohydrate mixture composition, and wherein the standard of known composition is a known carbohydrate mixture composition.

2. A method for an automated carbohydrate mixture composition pattern profiling comprising the steps of
a) providing a sample containing a carbohydrate mixture composition;
b) labelling of said carbohydrate mixture composition with a fluorescent label;
c) providing a second sample having a known carbohydrate mixture composition pattern to be compared with
d) generating electropherograms of the carbohydrate mixture composition of the first and second sample using capillary gel electrophoresis- laser induced fluorescence;
e) comparing the standard migration time indices calculated from the obtained electropherogram of the first sample and the second sample;
f) analysing the identity and/or differences between the carbohydrate mixture composition pattern profiles of the first and the second sample
wherein standard migration time indices of the carbohydrates present in the samples are calculated based on internal standards of known composition whereby the internal standard is added to the samples to be analysed, and wherein the standard is a known carbohydrate mixture composition.

3. The method according to claim 1 or 2, wherein the sample contains a mixture of carbohydrates.

4. The method according to anyone of the preceding claims, wherein the sample is an extraction of glycans and the method allows for the identification of a glycosylation pattern profile.

5. The method according to claim 4, wherein the glycosylation pattern of a glycoprotein is identified.

6. The method according to anyone of the preceding claims, wherein the fluorescent label is 8-amino-1,3,6-pyrenetrisulfonic acid.

7. The method according to anyone of the preceding claims, wherein the standard is a known glycan pool.

8. The method according to anyone of the preceding claims, wherein the method allow for high throughput identification of carbohydrate mixtures having unknown compositions.

9. The method according to anyone of the preceding claims, wherein the components of the carbohydrate mixture is determined quantitatively.

## Patentansprüche

1. Verfahren zur automatischen Bestimmung und/oder Identifikation von Kohlenhydraten und/oder Mustern von Zusammensetzungen von Mischungen von Kohlenhydraten umfassend die Schritte:
a) Erhalt einer Probe enthaltend mindestens ein Kohlenhydrat;
b) Markieren dieses/dieser Kohlenhydrat/e mit einem Fluoreszenzlabel;
c) Bereitstellen eines Standards bekannter Zusammensetzungen;
d) Bestimmen der Migrationszeit(en) dieses/dieser Kohlenhydrat(s)e und der Standards bekannter Zusammensetzungen unter Verwendung einer Kapillargelelektro-phorese-laserinduzierter Fluoreszenz;
e) Normalisieren der Migrationszeit(en) zu Migrationszeitindiz(es) basierend auf gegebene Standardmigrationszeitindiz(es) des Standards;
f) Vergleich dieser Migrationszeitindiz(es) dieses/dieser Kohlenhydrat(s)e mit Standardmigrationszeitindiz(es) aus einer Datenbank;
g) Identifizieren oder Bestimmen des/der Kohlenhydrats/Kohlenhydrate und/oder der Muster der Zusammensetzung der Mischung von Kohlenhydraten, wobei die Standardzusammensetzung zu der Probe, die die Zusammensetzung mit der unbekannten Kohlenhydratmischung enthält, zugegeben wird und, wobei der Standard bekannter Zusammensetzung, eine bekannte Zusammensetzung einer Kohlenhydratmischung ist.

2. Verfahren für ein automatisches Erstellen eines Musters einer Zusammensetzung einer Mischung von Kohlenhydraten umfassend die Schritte:
a) Bereitstellen einer Probe enthaltend eine Zusammensetzung einer Kohlenhydratmischung;
b) Markierung dieser Zusammensetzung mit der Kohlenhydratmischung mit einem Fluoreszenz-Label;
c) Bereitstellen einer zweiten Probe mit einem bekannten Muster einer Zusammensetzung einer Kohlenhydratmischung mit der ein Vergleich durchgeführt wird;
d) Erstellen von Elektropherogrammen dieser Zusammensetzung der Kohlenhydratmischung der ersten und zweiten Probe unter Verwendung einer Kapillargelelektrophorese-laserinduzierten Fluoreszenz;
e) Vergleich der Standardmigrationsindizes, berechnet aus dem erhaltenen Elektropherogramm der ersten Probe und der zweiten Probe;
f) Analysieren der Identität und/oder der Unterschiede zwischen den Profilen der Musterzusammensetzung der Kohlenhydratmischung der ersten und der zweiten Probe, wobei Standardmigrationsindizes der Kohlenhydrate, die in den Proben vorhanden sind, berechnet werden basierend auf den internen Standards der bekannten Zusammensetzung, wobei der interne Standard zu der zu analysierenden Probe zugesetzt wird und wobei der Standard eine bekannte Zusammensetzung einer Kohlenhydratmischung ist.

3. Verfahren nach Anspruch 1 oder 2, wobei die Probe eine Mischung von Kohlenhydraten enthält.

4. Verfahren nach einem der vorherigen Ansprüche, wobei die Probe eine Extraktion von Glykanen ist und das Verfahren die Identifikation des Profils des Glykosylierungsmusters erlaubt.

5. Verfahren nach Anspruch 4, wobei das Glykosylierungsmuster eines Glykoproteins identifiziert wird.

6. Verfahren nach einem der vorherigen Ansprüche, wobei das Fluoreszenzlabel 8-Amino-1,3, 6-Pyrentrisulfonsäure ist.

7. Verfahren nach einem der vorherigen Ansprüche, wobei der Standard ein bekannter Glykanpool ist.

8. Verfahren nach einem der vorherigen Ansprüche, wobei das Verfahren eine Hochdurchsatzidentifikation von Mischungen von Kohlenhydraten mit unbekannten Zusammensetzungen erlaubt.

9. Verfahren nach einem der vorherigen Ansprüche, wobei die Komponenten der Kohlenhydratmischung quantitativ bestimmt werden.

## Revendications

1. Procédé pour une détermination et/ou une identification automatisées de glucides et/ou un établissement de profil de motif de composition de mélange de glucides comprenant les étapes consistant à :
a) obtenir un échantillon contenant au moins un glucide ;
b) marquer ledit ou lesdits glucides avec un marqueur fluorescent ;
c) fournir un étalon de composition connue ;
d) déterminer le ou les temps de migration dudit ou desdits glucides et de l'étalon d'une composition connue à l'aide de l'électrophorèse capillaire sur gel-fluorescence induite par laser ;
e) normaliser le ou les temps de migration en un ou plusieurs indices de temps de migration sur la base d'un ou plusieurs indices de temps de migration de référence donnés de l'étalon ;
f) comparer ce ou ces indices de temps de migration du ou des glucides avec un ou plusieurs indices de temps de migration de référence provenant d'une base de données ;
g) identifier ou déterminer les glucides et/ou les motifs de composition de mélange de glucides,
dans lequel la composition de référence est ajoutée à l'échantillon contenant la composition inconnue de mélange de glucides et dans lequel l'étalon de composition connue est une composition de mélange de glucides connue.

2. Procédé pour un établissement automatisé de profil de motif de composition de mélange de glucides comprenant les étapes consistant à
a) fournir un échantillon contenant une composition de mélange de glucides ;
b) marquer ladite composition de mélange de glucides avec un marqueur fluorescent ;
c) fournir un second échantillon ayant un motif de composition de mélange de glucides connu pour comparaison
d) produire des électrophorégrammes de la composition de mélange de glucides du premier échantillon et du second échantillon à l'aide de l'électrophorèse capillaire sur gel-fluorescence induite par laser ;
e) comparer les indices de temps de migration de référence calculés à partir de l'électrophorégramme obtenu du premier échantillon et du second échantillon ;
f) analyser l'identité et/ou les différences entre les profils de motif de composition de mélange de glucides du premier échantillon et du second échantillon,
dans lequel les indices de temps de migration de référence des glucides présents dans les échantillons sont calculés sur la base d'étalons internes de composition connue, dans lequel l'étalon interne est ajouté aux échantillons à analyser et dans lequel l'étalon est une composition de mélange de glucides connue.

3. Procédé selon la revendication 1 ou 2, dans lequel l'échantillon contient un mélange de glucides.

4. Procédé selon l'une quelconque des revendications précédentes, dans lequel l'échantillon est une extraction de glycanes et le procédé permettant l'identification d'un profil de motif de glycosylation.

5. Procédé selon la revendication 4, dans lequel le motif de glycosylation d'une glycoprotéine est identifié.

6. Procédé selon l'une quelconque des revendications précédentes, dans lequel le marqueur fluorescent est l'acide 8-amino-1,3,6-pyrènetrisulfonique.

7. Procédé selon l'une quelconque des revendications précédentes, dans lequel l'étalon est un pool de glycanes connu.

8. Procédé selon l'une quelconque des revendications précédentes, le procédé permettant l'identification à haut débit de mélanges de glucides ayant des compositions inconnues.

9. Procédé selon l'une quelconque des revendications précédentes, dans lequel les composants du mélange de glucides sont déterminés quantitativement.
